# EUROPÄISCHE PATENTSCHRIFT

(11) **EP 1 182 390 B1**
(45) Veröffentlichungstag und Bekanntmachung des Hinweises auf die Patenterteilung: **26.10.2005**
(21) Anmeldenummer: 01810777.1
(22) Anmeldetag: 13.08.2001
(51) Int. Cl.: F16L 21/06, F16L 33/02

(54) **Schnellverschluss**
Quick-action closing
Fermeture à action rapide

(30) Priorität: 22.08.2000 DE 10040983
(43) Veröffentlichungstag der Anmeldung: 27.02.2002
(73) Patentinhaber: HILTI Aktiengesellschaft, 9494 Schaan (LI)
(72) Erfinder: Sedlmeier, Andreas, 86932 Ummendorf (DE)
(74) Vertreter: Wildi, Roland

(56) Entgegenhaltungen:
- GB-A- 726 157
- US-A- 2 822 198
- US-A- 5 518 332
- US-A- 5 926 922

## Beschreibung

Die Erfindung betrifft einen Schnellverschluss, insbesondere für Rohrschellen, mit zwei miteinander zu verbindenden Teilen und einem beweglichen Verschlussteil, wobei ein Teil im wesentlichen eine Leiste mit zumindest einem Anschlag aufweist und das zweite Teil eine Platte mit einer Durchtrittsöffnung, deren Ausdehnung zumindest der axialen Projektion der Leiste und des Anschlages entspricht, aufweist und das Verschlussteil gegen eine Federkraft aus dem axialen Projektionsbereich der Leiste und des Anschlages hinaus bewegbar ist.

Aus dem Stand der Technik sind unterschiedliche Verschlüsse mit zwei miteinander zu verbindenden Teilen und einem beweglichen Verschlussteil für verschiedenste Anwendungen bekannt. Beispielsweise zeigt die GB 726,157 A eine Vorrichtung zur Befestigung einer Zierleiste an einem Blechteil eines Fahrzeuges. An der Zierleiste ist ein Leistenabschnitt mit zwei einander diametral gegenüberliegenden Anschlägen ausgebildet, der in eine Durchtrittsöffnung im Blechteil einführbar ist. Zur Fixierung wird nach dem Zusammenführen der beiden Teile eine separate Federklammer von oben her oder von unten her über den Leistenabschnitt geschoben, so dass die Federklammer mit ihren umgebogenen Abschnitten in die Anschläge des Leistenabschnitts einschnappt und die Vorrichtung verspannt.

Aus der US 2,822,198 A ist eine Befestigungsvorrichtung für eine Stange an einer Grundplatte bekannt. Die Stange weist an einem Ende eine umlaufende Nut auf. Die Grundplatte ist mit einer Durchführöffnung sowie einem Schlitz für eine Federklammer versehen. Nach dem Einführen der zu fixierenden Stange werden die freien, umgebogenen Enden der im Schlitz gehaltenen Federklammer gegen die Federwirkung in die Durchführöffnung gezwungen, wobei die Stange axial fixiert wird.

Die US 5,518,332 A zeigt einen Verschluss zur gelenkigen Befestigung eines Bauteils, der einen Bolzen mit einer umlaufenden Nut und eine Basisplatte mit einem Hülsenabschnitt sowie eine Federklammer zum Fixieren der beiden Teile aufweist. Zur Festlegung der Federklammer an der Basisplatte sind eine Aufnahme und parallel zueinander verlaufende Schlitze an dem Hülsenabschnitt vorgesehen. Beim Einführen des Bolzens schnappen die Schenkel der Federklammer in die Nut des Bolzens ein und halten den Bolzen in Position.

Schnellverschlüsse der hier zur Diskussion stehenden Art dienen insbesondere der Befestigung von Gegenständen an Decken, Wänden, Böden und dergleichen. Dabei sind die Befestigungsstellen oftmals für das Montagepersonal ausserordentlich schwer zugänglich. Ferner erfordert die Montage über Kopf einen grossen Kraftaufwand. Aus diesen Gründen wird eine äusserst hohe Montagefreundlichkeit solcher Schnellverschlüsse verlangt.

Insbesondere bei der Befestigung von Rohren unter Zuhilfenahme von Rohrschellen wird gefordert, dass die Rohrschelle von nur einer Hand von einer Bedienungsperson verschliessbar ist, da es sich bei den zu montierenden Rohren meistens um sperrige und zum Teil auch schwer zu befestigende Gegenstände handelt.

Ein Schnellverschluss im Zusammenhang mit Rohrschellen ist beispielsweise aus der EP0597805 B1 bekannt und weist zwei miteinander zu verbindende Teile auf. Der eine Teil weist eine Leiste mit Anschlägen auf und der andere Teil eine Platte mit einer Durchtrittsöffnung für die Leiste mit den Anschlägen. Ein mit einem Gelenk mit der Platte verbundenes Verriegelungselement deckt einen Teil der Durchtrittsöffnung ab und ist gegen eine Federkraft von dieser wegschwenkbar gelagert. Die Drehachse des Verriegelungselementes verläuft parallel zur Oberfläche des Flansches. Zur Erzeugung der Federkraft ist ein sich am Verriegelungselement und am Flansch abstützendes Federglied vorgesehen. Das Verriegelungselement deckt die Durchtrittsöffnung so weit ab, dass der freibleibende Teil der Axialprojektion der Leiste ohne Anschläge entspricht.

Wird die Leiste durch die von dem Verriegelungselement abgedeckte Durchtrittsöffnung hindurchgeführt, schwenkt das Verriegelungselement um die Drehachse weg. Nach Erreichen der Endstellung der durch die Durchtrittsöffnung durchgeführten Leiste schwenkt das Verriegelungselement unter Hintergreifen des entsprechenden Anschlages zurück. Um den Schnellverschluss zu lösen, muss der Anschlag so weit zurück bewegt werden, dass er ausserhalb des Kreisbereiches, des um die Drehachse schwenkbaren Verriegelungselementes liegt. Dieser Umstand wirkt sich bei einer Demontage der Rohrschelle vom Rohr nachteilig aus, da der vom Montagepersonal aufzubringende Kraftaufwand sehr gross ist. Unter Umständen kann der bekannte Schnellverschluss gar nicht mehr geöffnet werden, da der Anschlag nicht mehr um die nötige Strecke zurück bewegt werden kann.

Ferner ist die Fertigung des bekannten Schnellverschlusses aufwendig, da der Schnellverschluss aus mehreren aufwendigen Teilen besteht, was sich wirtschaftlich negativ auswirkt.

Die US 5,926,922 A zeigt einen Schnellverschluss mit einer Leiste, die zwei fingerartig ausgebildete Stege und daran mehrere einander diametral gegenüberliegende Anschläge aufweist, und einer eine Durchtrittsöffnung aufweisende Platte. Beim Zusammenführen des Schnellverschlusses werden die Stege durch die Ränder der Durchtrittsöffnung in der von der Leiste aufgespannten Ebene gegeneinander gebogen und die Anschläge hintergreifen die Ränder der Durchtrittsöffnung. Zum Lösen des Schnellverschlusses müssen die Stege der Leiste wieder gegeneinander gebogen und in diesem Zustand aus der Durchtrittsöffnung geschoben werden.

Der vorliegenden Erfindung liegt die Aufgabe zugrunde, einen Schnellverschluss zu schaffen, der sich in einfacher und bedienungsfreundlicher Art öffnen und schliessen lässt und ausserdem wirtschaftlich herstellbar ist.

Erfindungsgemäss wird die Aufgabe dadurch gelöst, dass an der Leiste zwei einander diametral gegenüberliegende Anschläge vorgesehen sind und dass das Verschlussteil als Federklammer und im Wesentlichen U-förmig ausgebildet ist. Die beiden Enden der Federklammer werden durch etwa parallel angeordnete, auf der einführseitig abgewandten Oberfläche der Platte aufliegende, sich teilweise im axialen Projektionsbereich der Leiste und der Anschläge befindliche Federschenkel gebildet, die durch eine Rotationsbewegung um eine etwa parallel zur Einführrichtung ausgebildete Rotationsachse, aus dem axialen Projektionsbereich der Leiste und der Anschläge bewegbar sind. Die freien Enden der Federschenkel sind U-förmig, ein freies Ende der Platte teilweise umfassend ausgebildet, wobei die durch die U-Form aufgespannte Fläche senkrecht zur einführseitig abgewandten Oberfläche der Platte steht.

Dadurch, dass der bewegbare Federschenkel parallel zur Fläche des Anschlages rotiert, muss die Leiste beim Öffnen des Schnellverschlusses nicht entgegen der Einführrichtung bewegt werden. Allenfalls kann diese Massnahme ergriffen werden, um die Reibung zwischen dem Federschenkel und der Fläche des Anschlages zu reduzieren. Ausserdem ist die Herstellung des Schnellverschlusses, insbesondere des Verschlussteils einfacher und damit wirtschaftlicher, da er einteilig, durch eine Federklammer, ausgebildet ist. Die einteilige Ausgestaltung wirkt sich auch positiv auf eine sichere und benutzerfreundliche Handhabung aus.

Durch die mögliche symmetrische Ausbildung des Verschlussteils ergibt sich eine optimale Lastverteilung und daraus eine hohe Belastbarkeit des Schnellverschlusses. Der Verschlussteil kann durch die Lastverteilung auf zwei Federschenkel auch mit einer geringeren Materialstärke ausgebildet werden, was sich einerseits fertigungstechnisch in einer leichteren Montage des Verschlussteils und andererseits in einer benutzerfreundlicheren Ausgestaltung auswirkt.

Dadurch, dass die freien Enden der Federschenkel U-förmig, das freie Ende der Platte teilweise umfassend ausgebildet sind, wobei die durch die U-Form aufgespannte Fläche senkrecht zur einführseitig abgewandten Oberfläche der Platte steht, wird die Federklammer am freien Ende der Platte durch einen Kraftschluss gehalten. Die Montage bei der Fertigung des Schnellverschlusses gestaltet sich durch genannte Ausgestaltung einfach.

Zweckmässigerweise erstrecken sich die Federschenkel über ein freies Ende der Platte hinaus, um dem Montagepersonal ein klar ersichtliches und leicht zugängliches, dem Lösen des Schnellverschlusses dienendenes, Bedienungselement zur Verfügung zu stellen.

Zwischen der Durchtrittsöffnung und dem freien Ende der Platte ist vorzugsweise im Schwenkbereich des Federschenkels ein Schenkelanschlag angeordnet. Insbesondere bei einer im wesentlichen U-förmigen Ausbildung der Federklammer kann der Schnellverschluss somit durch Zusammenpressen der beiden sich über das freie Ende der Platte hinaus erstreckenden Federschenkel geöffnet werden. Dadurch, dass sich die Federschenkel um den Schenkelanschlag drehen, bewegen sie sich im Bereich der Durchtrittsöffnung auseinander und geben die Leiste mit den Anschlägen somit frei.

Der Schenkelanschlag ist vorteilhafterweise als Ausprägung auf der einführseitig abgewandten Oberfläche der Platte ausgebildet, um zu einer wirtschaftlichen Herstellung des Schenkelanschlag beizutragen.

Vorteilhafterweise ist die Federklammer aus einem Material, mit einem Elastizitätsmodul grösser als 100kN/mm2 gebildet. Somit weist die Federklammer eine hohe Elastizität auf, was sich positiv auf die Sicherheit und die Lebensdauer des Schnellverschlusses auswirkt.

Vorzugsweise ist die Federklammer aus einem Federstahl. Dieses Material stellt für eine derartige Beanspruchung die geeigneten Eigenschaften bereit und ist wirtschaftlich verarbeitbar.

Gemäss einem weiteren Vorschlag der Erfindung weist die Leiste mindestens zwei axial hintereinander angeordnete Anschläge auf und der Abstand zwischen zwei axial hintereinanderliegenden Anschlägen entspricht vorzugsweise dem 1- bis 5-fachen des maximalen Durchmessers des Federschenkels. Dadurch ist der Schnellverschluss fein justierbar.

Die Erfindung wird nachstehend anhand eines Ausführungsbeispieles näher erläutert. Es zeigen:
- Fig. 1: eine Rohrschelle mit einem erfindungsgemässen Schnellverschluss
- Fig. 2: eine vergrösserte Darstellung des in Fig. 1 dargestellten Schnellverschlusses im offenen Zustand.

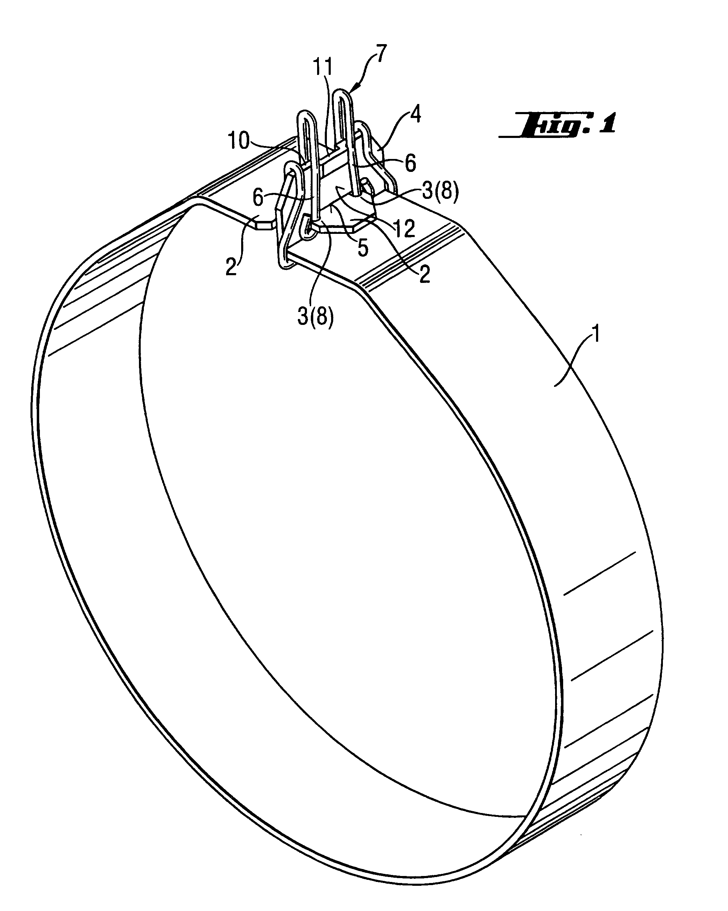

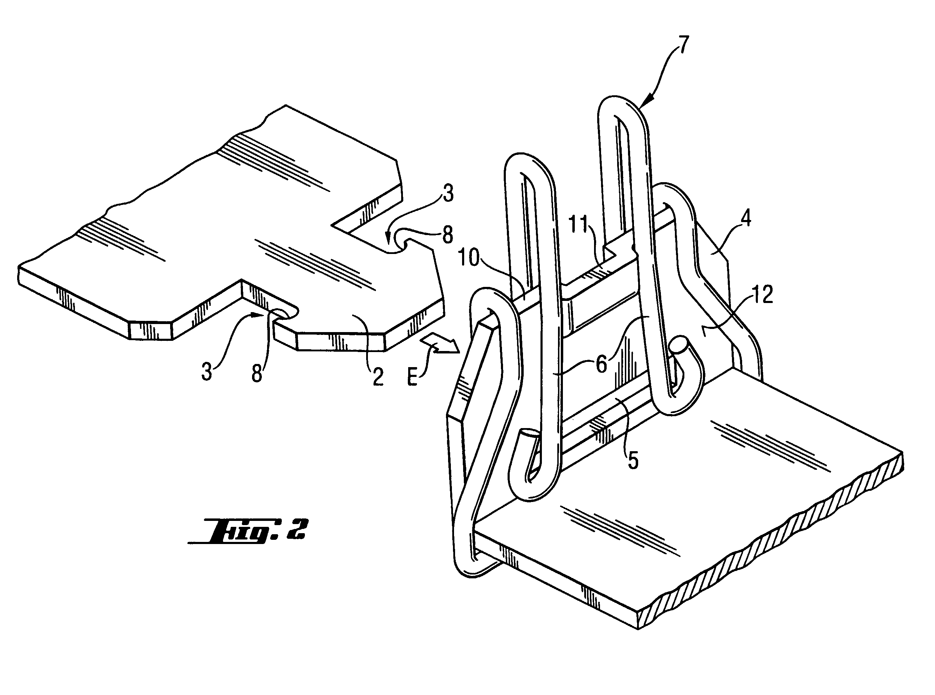

Die Fig. 1 und 2 stellen einen erfindungsgemässen Schnellverschluss im geschlossenen und offenen Zustand dar. In Fig. 1 ist eine Rohrschelle 1 dargestellt, deren Enden durch den Schnellverschluss miteinander lösbar verbunden sind. Ein erstes Ende der Rohrschelle 1 weist im wesentlichen eine Leiste 2 auf, die zur Bildung von Anschlägen, ein Paar einander gegenüberliegende sägezahnartige Vorsprünge mit Anschlagflächen 3 aufweist. Die Leiste 2 kann auch mehrere Paare von einander gegenüberliegenden sägezahnartigen Vorsprüngen aufweisen, um die Verbindung justierbar auszugestalten. Wie insbesondere Fig. 2 zeigt, sind diese sägezahnartigen Vorsprünge an entsprechend ausgebildeten Kanten angeordnet.

Ein zweites Ende der Rohrschelle 1 weist eine Platte 4 auf mit einer darauf angebrachten im wesentlichen U-förmigen Federklammer 7. Die Platte 4 ist mit einer Durchtrittsöffnung 5 versehen, die teilweise durch die von der Federklammer 7 gebildeten, etwa parallel angeordnete Federschenkel 6 im axialen Projektionsbereich der Leiste 2 und der Anschläge abgedeckt wird. Die beiden Federschenkel 6 liegen auf der einführseitig abgewandten Oberfläche 12 auf. Sie erstrecken sich über das freie Ende 10 der Platte 4 hinaus, wobei die freien Enden der Federschenkel 6 U-förmig ausgebildet sind und zwar derart, dass sie das freie Ende 10 der Platte 4 teilweise umfassen. Die von der U-Form aufgespannte Fläche steht senkrecht zur einführseitig abgewandten Oberfläche 12 der Platte 4.

Beim Einführen der Leiste 2 mit den Anschlägen werden die Federschenkel 6 durch die in eine Einführrichtung E bewegten sägezahnartigen Vorsprünge entgegen einer Federkraft der Federklammer 7 aus dem axialen Projektionsbereich der Leiste 2 und des Anschlages auf der Oberfläche 12 der Platte 4 bewegt. Dabei bewirkt die Federkraft der Federklammer 7, dass sich die Federschenkel 6 entlang der sägezahnartigen Vorsprüngen bewegen. Durch die sägezahnartige Ausgestaltung der Vorsprünge greifen die Federschenkel 6, falls keine Kraft von aussen wirkt, in der Ruheposition immer hinter eine Anschlagsfläche 3 oder geben die Leiste 2 mit den Anschlägen frei.

Um ein einfaches Lösen der Verbindung zu ermöglichen, erstrecken sich die Federschenkel 6 über das freie Ende 10 der Platte 4 hinaus. Zwischen den Federschenkeln 6 und am Endbereich des freien Endes 10 der Platte 4, ist auf der Platte 4 durch eine Ausprägung 11 ein Schenkelanschlag angeordnet. Werden nun die beiden sich über das freie Ende 10 der Platte 4 erstreckenden Bereiche der Federschenkel 6 durch eine äussere Kraft aus einer Ruheposition gegeneinander bewegt, so bewirkt dies eine Drehbewegung der Federschenkel 6 um den Schenkelanschlag, was ein Wegschwenken der im Bereich der Durchtrittsöffnung 5 befindlichen Teile der Federschenkel 6 zur Folge hat. Wirkt eine genügend grosse Kraft, so befinden sich die freien Enden der Federschenkel 6 ausserhalb des axialen Projektionsbereiches der Leiste 2 und des Anschlages, womit der Schnellverschluss geöffnet ist. Reduziert sich die äussere Kraft oder fällt sie gar weg, so bewegen sich die Federschenkel 6 durch die Federkraft der Federklammer 7 wieder zurück zur die Ruheposition.

Um ein unbeabsichtigtes Lösen des Schnellverschlusses zu verhindern, weist die Anschlagfläche zweckmässigerweise eine Ausnehmung 8 auf, die insbesondere in Fig. 2 dargestellt ist. Die Ausbildung der Ausnehmung 8 ist derart bemessen, dass der entsprechende Federschenkel 6 in diese bringbar ist.

## Patentansprüche

1. Schnellverschluss, insbesondere für Rohrschellen, mit zwei miteinander zu verbindenden Teilen und einem beweglichen Verschlussteil, wobei ein Teil im Wesentlichen eine Leiste (2) mit zumindest einem Anschlag aufweist und das zweite Teil eine Platte (4) mit einer Durchtrittsöffnung (5), deren Ausdehnung zumindest der axialen Projektion der Leiste (2) und des Anschlags entspricht, aufweist und das Verschlussteil gegen eine Federkraft aus dem axialen Projektionsbereich der Leiste (2) und des Anschlags hinaus bewegbar ist, **dadurch gekennzeichnet, dass**
an der Leiste (2) zwei einander diametral gegenüberliegende Anschläge vorgesehen sind und dass
das Verschlussteil als Federklammer (7) und im Wesentlichen U-förmig ausgebildet ist, wobei die beiden Enden der Federklammer (7) durch etwa parallel angeordnete, auf der einführseitig abgewandten Oberfläche (12) der Platte (4) aufliegende, sich teilweise im axialen Projektionsbereich der Leiste (2) und der Anschläge befindliche Federschenkel (6) gebildet werden, die durch eine Rotationsbewegung um eine etwa parallel zur Einführrichtung (E) ausgebildete Rotationsachse, aus dem axialen Projektionsbereich der Leiste (2) und der Anschläge bewegbar sind, und wobei
die freien Enden der Federschenkel (6) U-förmig, ein freies Ende (10) der Platte (4) teilweise umfassend ausgebildet sind, wobei die durch die U-Form aufgespannte Fläche senkrecht zur einführseitig abgewandten Oberfläche (12) der Platte (4) steht.

2. Schnellverschluss nach Anspruch 1, **dadurch gekennzeichnet, dass** sich die Federschenkel (6) über ein freies Ende (10) der Platte (4) hinaus erstrecken.

3. Schnellverschluss nach Anspruch 1 oder 2, **dadurch gekennzeichnet, dass** zwischen der Durchtrittsöffnung (5) und dem freien Ende (10) der Platte (4), im Schwenkbereich des Federschenkels (6) ein Schenkelanschlag angeordnet ist.

4. Schnellverschluss nach Anspruch 3, **dadurch gekennzeichnet, dass** der Schenkelanschlag als Ausprägung (11) auf der einführseitig abgewandten Oberfläche (12) der Platte (4) ausgebildet ist.

5. Schnellverschluss nach einem der Ansprüche 1 bis 4, **dadurch gekennzeichnet, dass** die Federklammer (7) aus einem Material, mit einem Elastizitätsmodul grösser als 100kN/mm2 gebildet ist.

6. Schnellverschluss nach einem der Ansprüche 1 bis 5, **dadurch gekennzeichnet, dass** die Federklammer (7) aus einem Federstahl ist.

7. Schnellverschluss nach einem der Ansprüche 1 bis 6, **dadurch gekennzeichnet, dass** die Leiste (2) mindestens zwei axial hintereinander angeordnete Anschläge aufweist und der Abstand zwischen zwei benachbarten, axial hintereinander angeordneten Anschlägen, dem 1- bis 5-fachen des maximalen Durchmessers des Federschenkels (6) entspricht.

## Claims

1. Instantaneous closure, in particular for conduit clips, comprising two interconnectible sections and a movable closure section, and one section comprises essentially a ledge (2) with at least one stop, and the second section comprises a plate (4) with a throughbore (5) the expanse of which corresponds at least with the axial projection of the ledge (2) and the stop, and the closure section is movable against a springload from the axial projection area of the ledge (2) and beyond the stop, **characterised in that**
on the ledge (2) are provided two stops which are positioned diametrically opposite each other, and
the closure section is designed as a spring clamp (7) and essentially U-shaped, and the two ends of the spring clamp (7) are formed by spring shanks (6) which are arranged approximately in parallel, resting on the surface (12) of the plate (4) facing away from the insertion side, partially located in the axial projection area of the ledge (2) and the stops, and which are movable by way of a rotary movement by a rotary axis designed to be approximately parallel to the insertion direction (E), movable from the axial projection area of the ledge (2) and the stops, and
the free ends of the spring shanks (6) are designed to be U-shaped and partially embracing a free end (10) of the plate (4), and the surface clamped on by the U-shape stands perpendicularly to the surface (12) of the plate (4) facing perpendicularly away from the insertion side.

2. Instantaneous closure according to Claim 1, **characterised in that** the spring shanks (6) extend over a free end (10) of the plate (4).

3. Instantaneous closure according to Claim 1 or 2, **characterised in that** a shank stop is arranged in the pivotal area of the spring shank (6) between the throughbore (5) and the free end (10) of the plate (4).

4. Instantaneous closure according to Claim 3, **characterised in that** the shank stop is designed to be embossed (11) at the surface (12) of the plate (4) facing away from the insertion side.

5. Instantaneous closure according to one of Claims 1 to 4, **characterised in that** the spring clamp (7) is formed of a material with an elasticity modus greater than 100kN/mm2.

6. Instantaneous closure according to one of Claims 1 to 5, **characterised in that** the spring clamp (7) is made of a spring steel.

7. Instantaneous closure according to one of Claims 1 to 6, **characterised in that** the ledge (2) comprises at least two stops arranged axial one behind the other, and the distance between two adjacent stops arranged axially one behind the other corresponds with between 1 and 5 times the maximum diameter of the spring shank (6).

## Revendications

1. Fermeture rapide, en particulier pour colliers pour tubes, avec deux parties à relier entre elles et une partie mobile de fermeture, une partie comportant pour l'essentiel une languette (2) avec au moins une butée et la deuxième partie comportant une plaque (4) avec une ouverture traversante (5) dont l'extension correspond au moins à la projection axiale de la languette (2) et de la butée, et la partie de fermeture pouvant être déplacée, à l'encontre d'une force élastique, hors de la zone de projection axiale de la languette (2) et de la butée, **caractérisée en ce que** sur la languette (2) sont prévues deux butées diamétralement opposées et **en ce que** la partie de fermeture est conformée en attache élastique (7) et sensiblement en U, les deux extrémités de l'attache élastique (7) étant formées par des branches élastiques (6), lesquelles sont disposées parallèlement, reposent sur la surface (12) de la plaque (4) orientée à l'opposé du côté introduction, se trouvent partiellement dans la zone de projection axiale de la languette (2) et des butées et peuvent être déplacées, par un mouvement de rotation autour d'un axe de rotation sensiblement parallèle à la direction d'introduction (E), hors de la zone de projection axiale de la languette (2) et des butées, et les extrémités libres des branches élastiques (6) étant conformées en U en entourant partiellement une extrémité libre (10) de la plaqué (4), la surface définie par la forme en U étant perpendiculaire à la surface (12) de la plaque (4) orientée à l'opposé du côté introduction.

2. Fermeture rapide selon la revendication 1, **caractérisée en ce que** les branches élastiques (6) s'étendent au-delà d'une extrémité libre (10) de la plaque (4).

3. Fermeture rapide selon la revendication 1 ou 2, **caractérisée en ce que**, entre l'ouverture traversante (5) et l'extrémité libre (10) de la plaque (4), une butée de branches est disposée dans la zone de pivotement de la branche élastique (6).

4. Fermeture rapide selon la revendication 3, **caractérisée en ce que** la butée de branches est conformée en empreinte (11) sur la surface (12) de la plaque (4) orientée à l'opposé du côté introduction.

5. Fermeture rapide selon une des revendications. 1 à 4, **caractérisée en ce que** l'attache élastique (7) est réalisée dans une matière possédant un module d'élasticité supérieur à 100 kN/mm².

6. Fermeture rapide selon une des revendications 1 à 5, **caractérisée en ce que** l'attache élastique (7) est en acier à ressorts.

7. Fermeture rapide selon une des revendications 1 à 6, **caractérisée en ce que** la languette (2) comporte au moins deux butées disposées axialement l'une derrière l'autre, et la distance entre deux butées voisines disposées axialement l'une derrière l'autre correspond à 1 à 5 fois le diamètre maximal de la branche élastique (6).
